# EUROPEAN PATENT APPLICATION

(11) **EP 0 753 926 A2**
(43) Date of publication of application: **15.01.1997**
(21) Application number: 96660038.9
(22) Date of filing: 03.07.1996
(51) Int. Cl.: H02J 13/00

(54) **Electric installation system and method for performing operational definitions of the electric installation system**

(30) Priority: 12.07.1995 FI 953416
(71) Applicant: PK Cables OY, 90440 Kempele (FI)
(72) Inventor: Nyyssölä, Jari, 90450 Oulu (FI)
(74) Representative: Dahlström, Karl Krister

(57) **Abstract**

The invention relates to an electric installation system and a method for performing operational definitions of the electric installation system. The system comprises a control unit (2) connected to a power supply, the unit comprising several inputs and outputs, the inputs (11 to 19) being connected to switching means (31 to 33) included in the system and the outputs (21 to 29) being connected to outlets (41 to 43) included in the system. In accordance with the invention, the system is such that the system comprises means (101) for registering a function group formed from the switched-on outputs into memory, that the switching means (32,33) having switched on the outputs form means for determining the outputs for the function group, and that one switching means (31) comprises a means for giving a function group registration command.

## Description

The invention relates to an electric installation system comprising a control unit connected to a power supply, the unit comprising several inputs and outputs, the inputs being connected to switching means included in the system and the outputs being connected to outlets included in the system.

The invention also relates to a method for performing operational definitions of an electric installation system in which method the electric installation system comprises a control unit provided with a power supply and switching means in connection with inputs included in the control unit and outlets connected to outputs of the control unit.

In conventional known electric installation systems for buildings, transfer of energy to an outlet, such as a light point, and the control of the operation of the outlet, i.e. the switching operation, are carried out over the same conductors. For instance, the switching operation of light points is performed by circulating current from a distributing box positioned on the wall close to the ceiling to a light switch positioned lower on the wall back to the distributing box and further to a ceiling light fitting. Transfer of energy and the control function, i.e. the current message of the switching operation, thus take place in the same common physical current conductors. In conventional electric installation systems known from the prior art, the conductor section of a chain of outlets is formed by a cable obtained from a reel and cut into a suitable length on a building site, at the ends of which cables the ends of individual conductors are stripped, after which the conductor ends are joined by screws e.g to the switch box of a light fitting, to a wall socket, to a light switch or e.g. to a distribution terminal. In known systems the amount of installation material and installation work is great and the system is nevertheless extremely poorly controllable.

Prior art also teaches a system in which a microcircuit is integrated into light switches, controllers or light fixtures. In this solution, the control current path, i.e. the weak-current path, which is electrically separate from the power cable, is, however, formed in the same cable fixedly within the same protective sheath as the power cable, and therefore the ways of wiring the outlets and control points have to be closely related, so that the outlet and control-switch operations cannot be implemented as separate connections, which in turn makes it difficult to attain a cost-effective structure. The implementation of the control unit will also be difficult because microcircuits in the switches and elsewhere have to be taken into consideration.

Applicant's previous Finnish Patent Application 934,504 discloses a system which uses industrially produced cable harnesses cut into predetermined lengths, the cable harnesses being provided with fixed plug connectors. This solution affords many advantages in relation to speeding up the installation work and lowering installation and material costs.

All prior art solutions have, however, the problem that the definition of the operations of the switches and the modification of the operations of the switches are either impossible or very difficult as it would require very close attention to the programming of the control unit in the system.

The object of the present invention is to provide a new electric installation system and a method which avoid the problems associated with prior art solutions.

This object is achieved by an electric installation system according to the invention which is characterized in that the system comprises means for registering a function group formed from the switched-on outputs into memory, that the switching means having switched on the outputs form means for determining the outputs for the function group, and that one switching means comprises a means for giving a function group registration command.

To achieve these objects, the method according to the invention is characterized in that a function group is formed under one switch and this function group is formed so that a switching function is formed with said one switching means, whereby the system registers the modes of the switched-on outputs and forms a function group whose outputs can be switched on and off by means of said one switching means.

It is clear that the solution according to the invention can have one or more switches, i.e. instruction switches, registering the function group, preferably so that switches of three parts are used as switching elements, two of which are normal switches and the third is only for forming the function group and for switching it on or off. Switching-on and switching-off generally refer to a change in the mode.

The solution according to the invention provides several advantages. The new solution enables a flexible modification of the electric installation system and it is very user-friendly both for an electrician carrying out primary installation, but especially for an ordinary house-owner who may, while living in the house, want to change operational definitions of the switches in the system. The solution according to the invention is small in size and advantageous in costs as it is based on the use of one microcircuit. The new solution is modular in structure and thus it can be installed fast. In the new system, the house-owner will not need much instruction until he/she is capable of changing the operation of the system.

Different systems, such as a normal lighting system, a wall socket system, air-conditioning and a burglar alarm system can be readily integrated by means of the system. The solution according to the invention also allows the degree of prefabrication of electric installations to be considerably greater than previously. Microcircuits or other components need not be included in the chains of outlets in the new solution and therefore the planning of the control unit and its different implementation alternatives can be realized more freely. The new system is also tolerant to disturbances.

In the following, the invention will be explained in more detail with reference to the attached drawings, in which

Figure 1 shows a simplified schematic diagram of an electric installation system of a building,

Figure 2 shows a control unit comprised by the electric installation system, and

Figure 3 shows a control circuit comprised by the control unit.

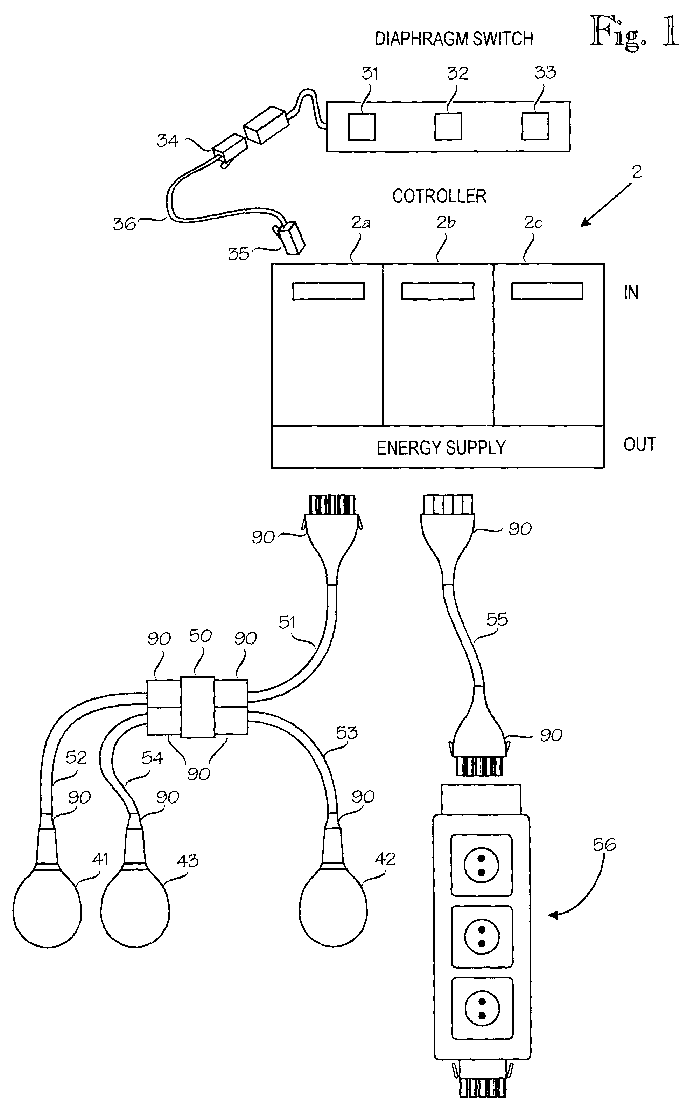

Referring to Figures 1 to 3, the invention relates to an electric installation system used in connection with a building, such as a one-family house, a flat, an industrial hall or the like.

The system comprises a control unit 2 to be connected to the power supply by a connector 1 which control unit includes a first block 2a comprising several inputs 11 to 20 and outputs 21 to 29, the inputs 11 to 20 being connected to switching means 31 to 33 included in the system and the outputs 21 to 29 being connected to outlets included in the system. The inputs 11 to 19 and the outputs 21 to 29 in the block 2a of the control unit 2 and in other blocks 2b and 2c comprise 10/10 I/O ports that thus have 10 inputs and 10 outputs. The inputs and outputs of the blocks 2b and 2c in the control unit and other structures are essentially similar to what is disclosed and what will be disclosed for the block 2a.

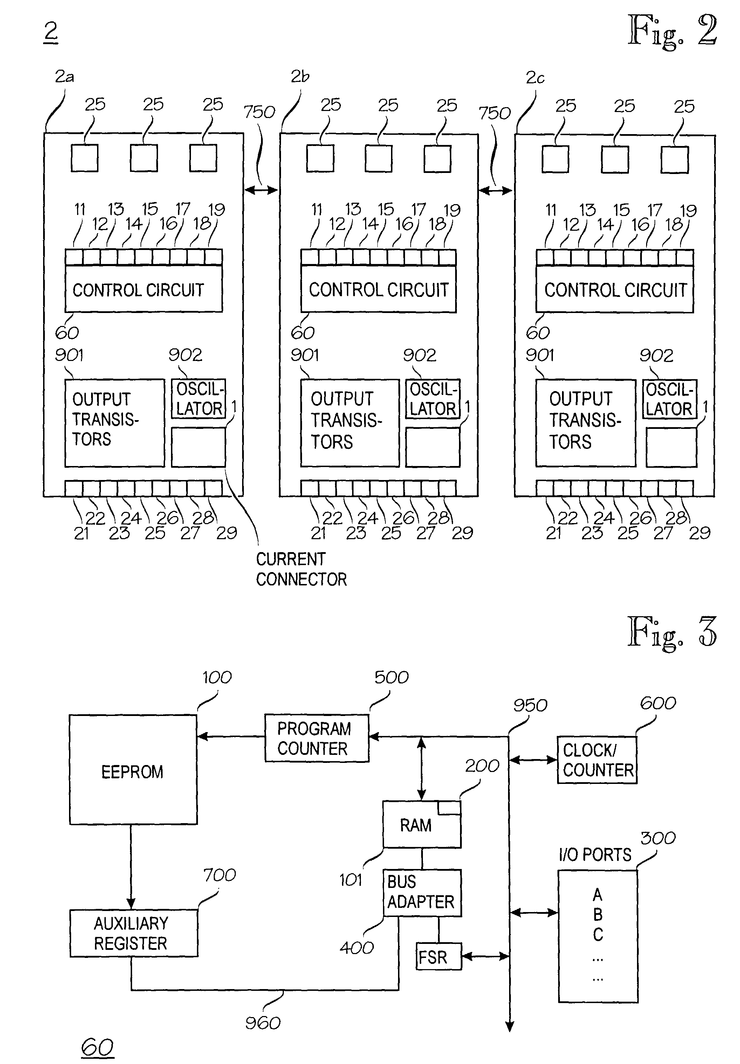

In one preferred embodiment, the switching means 32 to 33 are connected by means of a control cable 36, such as a modular plug cable 34, provided with connectors 34 to 35 to two inputs of the inputs 12 to 20 in the block 2a of the control unit 2. The input 11 and the output 21 are intended for a switch 31 used in the registration of a function group, that is, in instruction. Figure 2 shows three female connectors 25 in the upper portion of the control unit for three control cables, such as the cables 36. Nine different controls can be implemented by means of three modular plug cables, such as the cables 36. The outlets, such as light points 41 to 43, are connected to the outputs of the control unit 2a by means of cables harnesses 51 to 54, that is, plug connector cables 51 to 54. The cable harnesses, that is, the plug connector cables are provided with fixed plug connectors 90 and the plug connector cables 51 to 54 are industrially produced and cut into predetermined lengths. A branch piece 50 can be seen in Figure 1 branching one cable harness 51 into three cables harnesses 52 to 54. The plug connector cable 51 has 5 conductors, whereby its three phase conductors are connected to the first three outputs 21 to 23 of the control unit. Figure 2 also shows a cable harness 55 by means of which an aggregate 56 of three wall sockets is connected to the block 2b of the output in the control unit.

The internal operation of the control unit 2 is controlled by a control circuit 60 implemented by a microcircuit. Figure 3 shows a simplified block diagram of the control circuit 60. For the sake of clarity, it can be assumed that cross connection between the inputs 12 to 20 and the outputs 22 to 29 is direct, whereby the inputs 12 to 20 of the control lines connect, i.e. switch on/switch off the outputs 22 to 29, whereby the input 12 would connect the output 22, for example. In one preferred embodiment of the invention, a solution will be disclosed below for determining the cross connections, whereby the dependencies between the switching means and the outputs 22 to 29 are determined freely by means of ordinary switching operations given by the switching means 32 to 33.

The dependency between the switches 32 to 33 and the outputs may be such that the switch 32 switches on/off a light fitting 41 via the input 12 and the output 22. Correspondingly, the switch 33 switches on/off a light fitting 42 via the input 13 and the output 23. One of the next switch will switch on/off a light fitting 43 via the input 14 and the output 24.

In accordance with the invention, the system comprises means 101, such as an RAM memory 101, for registering a function group formed by the outputs switched on by the switches via the inputs 12 to 20 into the memory 101, that the switching means 32,33 having switched on the switched-on outputs 22,23 form means for determining the outputs 22,23 to the function group, and that one switching means 31 forms a means for giving a function group registration command by a switching operation. If the situation in a flat is for example such that the light fittings 41 to 42 are switched on by the switches 32 to 33, the switching means 32 to 33 having switched on the switched-on outputs 22 to 23 form means for determining the outputs 22 to 23 to the function group, and that one switching means, such as the switching means 31, forms a means for giving a function group registration command. A practical example may be such that the light fitting 41 is a bedroom light, that the switch 31 is an instruction switch, that is, a registration switch of the function group, in the bedroom and that the switch 32 is a light switch in the bedroom, that the light fitting 42 is a bathroom light and that the switch 33 is a bathroom light switch. In the evening before one goes to sleep, it often happens that the lights are switched on in the bedroom but the lights have been forgotten to be switched off in the bathroom. The problem is solved by the solution according to the invention in such a manner that the person supplies a switching operation, such as a pressing, from the instruction switch in the bedroom, whereby the block 101 of the control unit, that is, the RAM memory 101 registers the modes of the outputs and detects that both the light fitting 41 in the bedroom and the light fitting 42 in the bathroom are switched on as the outputs 22 and 23 are switched on. In a preferred embodiment, the system is such that said switching means 31 used in giving a registration command forms concurrently a means for switching off the outputs included in the function group. The system is most preferably such that the switching means 31 used in giving a registration command is arranged to switch off the outputs 12 and 13 after giving a registration command, which in practice means that the registration of the outputs, that is, the determination of the function group and the switching off of the outputs take place at the same time, that is, by pressing the switch 31, for example.

In practice, the switches 31 to 33 are to some extent separate and not all connected as could be assumed on the basis of Figure 1. The instruction switch 31 and the light switch 32 are in the bedroom, for example, and the third switch 33 can be in the bathroom. In practice, a switch panel of three parts is, however, used everywhere.

In order to render the system even more useful, the system is such that said switching means 31, that is, the instruction switch in the bedroom, used for giving a registration command forms a means for switching on the outputs 22 to 23 included in the function group, whereby in the morning, for example, the bedroom light 41 and also, the bathroom light can be switched on by using only the instruction switch 31 in the bedroom. The switch 31 could be called an instruction switch as it in a way instructs the system as to which outputs should be put into operation under said switch 31, that is, in its group. An instruction switch connected in parallel with the instruction switch 32 in the bedroom may also be somewhere else, in the bathroom, for example.

When viewed as a method, it is essential for the invention that a function group is formed under one switch, such as the switch 31, and this function group is formed in such a manner that a switching operation is formed by said one switching means 31, whereby the system registers the modes of the switched-on outputs, such as the outputs 22 to 23 and forms a function group whose outputs can be switched on and off by said one switching means 31, that is, the instruction switch.

In one preferred embodiment of the invention, the system is such that said switching means 31 used in giving a registration command forms a means for releasing the function group. This means that when first a first switching operation is given e.g. by pressing the switch 31, whereby the outputs 22,23 are switched off, the switch 31 is pressed after this a second time, which in practice means that the function group coming under said switch is reset as no output was switched on when the switch 31 was pressed the second time.

In one preferred embodiment of the invention, the system is such that each of the switching means 32,33 connecting the outputs 22,23 included in the function group form means for switching off all the outputs 22,23 of the function group by a switching operation differing from an ordinary switching operation. A so-called group switch-off is effected then, whereby when pressing any switch of the function group, such as the switch 32, the whole group, that is, the outputs 22 to 23 and thus also the light fittings 41 to 42 are switched off. Group switch-off is a very important feature that makes the use of the system easier.

In one preferred embodiment of the invention, the switching means 31 to 33 are press switches, such as diaphragm switches which switching structure affords the greatest possible advantage to the solution according to the invention.

When installing the system and when modifying the system subsequently, it is advantageous that in the system the switching means 32 to 33 and the switching operations given therefrom form means for determining the dependency between the switching means and the outputs, and that the system comprises means 101 for storing the dependency between the switching means and the outputs. Correspondingly, the method relates to determining the dependencies between the switching means 32 to 33 and the outputs 22 to 29 by means of ordinary switching operations given by the switching means 32 to 33, and that in the method the dependencies between the switching means and the outputs are stored. Said feature can be utilized both by an electrician when installing and by a house-owner when wishing to change original operational definitions of the switches.

In a preferred embodiment, the system comprises means 200 for locking and releasing the storing of the dependency between the switching means and the outputs. Correspondingly, the method relates to locking the storing of the dependencies between the switching means 32 to 33 and the outputs 22 to 29 and, when needed, to releasing the locking for redetermining the dependencies, after which the storing of the dependencies is locked again. Then the definitions obtained can be stored, but so that they can be modified.

The system is formed when a modular plug cable 36 and a plug connector cable 51 are connected to the connectors of the control unit, whereby the system is immediately ready for operation. It is possible to connect the connectors into a completely arbitrary order. When the serial number of the light fittings or the equipment to be controlled is known, the control unit 2 can be instructed by pressing the switches 32 to 33 at the input in a desired order. The order may be registered into the memory of the controller. This operation makes the work of an electrician of the system more easier. The electrician need not know beforehand how the owner of each control unit, that is, the house-owner, wants the equipment to operate. The order may be freely modified afterwards by the user, for example.

A more important point of view for the user is that the user can register via press buttons, that is, the switches 31 to 33, the desired operation combinations into memory, that is, the modes of the outputs can be registered into the memory 101 by pressing the instruction switch in connection with the input. The input switches 32 to 33 can be used for instructing the outputs of the controller 2 and they can be freely modified at any time. Priority can be determined for the instruction switches, such as the instruction switch 31 and other instruction switches. In that case, one of the switches has an effect on a greater number of outputs than the other. These instructions can be freely constructed one within the other. In a preferred embodiment of the invention, the control unit comprises a connection 750 between the different control blocks 2a to 2c of the control unit. The connections 750 enable the definition of different priorities for several instruction switches. This will improve the operation of the system.

It should be noted that the control circuit 60 in Figure 3 comprises a first memory 100, such as an EEPROM memory 100, and another memory 101, that is, an RAM memory. The EEPROM memory 100 contains a program memory controlling the operation. The RAM memory 101 receives instructions from the EEPROM memory 100 and also, the RAM memory 101 stores dependencies between the inputs and the outputs on the basis of the order the switches have been pressed during installation. The RAM memory 101 also stores function groups as was mentioned earlier. A block 300 illustrates an I/O port of the control circuit, a block 400 a bus adapting means, a block 500 a program counter and a block 600 a clock/counter, a block 700 an auxiliary register, buses are indicated by references 950 and 960. The EEPROM memory 100 is responsible e.g. for that at the definition stage it steps the definition sequence of the outputs forwards whenever the previous output is linked by pressing some switch to a switch just pressed.

It should be noted that in Figure 2 in addition to the structures disclosed earlier, the control unit comprises power-switching output transistors 901 or corresponding relays and an oscillator 902.

Even though the invention has been described above with reference to the examples of the attached drawings, it is obvious that the invention is not limited to them, but it may be modified in many ways within the inventive idea disclosed in the attached claims.

## Claims

1. An electric installation system comprising a control unit (2) connected to a power supply, the unit comprising several inputs (11 to 19) and outputs (21 to 29), the inputs (11 to 19) being connected to switching means (31 to 33) included in the system and the outputs (21 to 29) being connected to outlets (41 to 43) included in the system,
**characterized** in that the system comprises means (101) for registering a function group formed from the switched-on outputs into memory (101), that the switching means (32,33) having switched on the outputs (22,23) form means for determining the outputs (22,23) for the function group, and that one switching means (31) comprises a means (31) for giving a function group registration command.

2. A system according to claim 1, **characterized** in that said switching means (31) to be used in giving a registration command forms simultaneously a means for switching off the outputs (22, 23) included in the function group.

3. A system according to claim 2, **characterized** in that the switching means (31) to be used in giving a registration command is arranged to switch off the outputs (22,23) included in the function group after having given the registration command.

4. A system according to claim 1, **characterized** in that said switching means (31) to be used in giving a registration command forms a means for switching on the outputs (22,23) included in the function group.

5. A system according to claim 1, **characterized** in that said switching means (31) to be used in giving a registration command forms a means for releasing the function group.

6. A system according to claim 1, **characterized** in that each of the switching means (32,33) connecting the outputs included in the function group form means for switching off all the outputs of the function group by a switching operation differing from an ordinary switching operation.

7. A system according to claim 1, **characterized** in that in the system the switching means (32 to 33) and the switching operations given therefrom form means for determining the dependency between the switching means (32 to 33) and the outputs (21 to 29), and that the system comprises means for storing the dependency between the switching means (32 to 33) and the outputs (21 to 29).

8. A system according to claim 7, **characterized** in that the system comprises means (200) for locking and releasing the storing of the dependency between the switching means (32 to 33) and the outputs (21 to 29).

9. A system according to claim 1, **characterized** in that the switching means (31 to 33) are press switches.

10. A system according to claim 1, **characterized** in that the switching means (31 to 33) are connected to the inputs (11 to 19) of the control unit (2) by means of control cables (36) provided with connectors, and that outlets (41 to 43) are connected to the outputs (21 to 29) of the control unit (2) and possibly to one another by means of industrially produced cable harnesses (51 to 54) cut into predetermined lengths and provided with fixed plug connectors (90).

11. A method for performing operational definitions of an electric installation system in which method the electric installation system comprises a control unit provided with a power supply and switching means in connection with inputs included in the control unit and outlets connected to outputs of the control unit,
**characterized** in that a function group is formed under one switch and this function group is formed so that a switching function is formed with said one switching means, whereby the system registers the modes of the switched-on outputs and forms a function group whose outputs can be switched on and off by means of said one switching means.

12. A method according to claim 11, **characterized** in that in addition to registering the function group, the switching operation switches off the outputs of the function group.

13. A method according to claim 11 or 12, **characterized** in that at least two successive switching operations will release the function group.

14. A method according to claim 11, **characterized** in that the dependencies between the switching means and the outputs are determined by switching operations given by ordinary switching means, and that in the method the dependencies between the switching means and the outputs are stored.

15. A method according to claim 14, **characterized** in that the storing of the dependencies between the switching means and the outputs is locked and, when needed, is also released for redetermining the dependencies, after which the storing of the dependencies is locked again.
